# EUROPEAN PATENT SPECIFICATION

(11) **EP 3 141 345 B1**
(45) Date of publication and mention of the grant of the patent: **04.09.2019**
(21) Application number: 16382366.9
(22) Date of filing: 28.07.2016
(51) Int. Cl.: B25B 11/00

(54) **MODULAR AND ADJUSTABLE SLIDING BASE**
MODULARE UND EINSTELLBARE GLEITBASIS
BASE COULISSANTE MODULAIRE ET RÉGLABLE

(30) Priority: 05.08.2015 ES 201531166
(43) Date of publication of application: 15.03.2017
(73) Proprietor: Manufacturas y Transformados AB, S.L., 08700 Igualada (Barcelona) (ES)
(72) Inventor: BALSELLS MERCADÉ, Antoni, 08700 IGUALADA (Barcelona) (ES)
(74) Representative: Herrero & Asociados, S.L.

(56) References cited:
- DE-A1- 2 415 200
- DE-U1-202008 016 144
- US-A1- 2012 018 938
- US-B1- 6 189 876

## Description

### Technical Field of the Invention

The present invention relates to a modular and adjustable sliding base, intended mainly for flexible or rigid sheet material cutting machines, but being able to be applied to any machinery requiring it.

The main purpose of the modular and adjustable sliding base object of the invention is to enable having a perfectly flat and adjustable surface for arranging different types of stationary or moving surfaces thereon to enable cutting the different sheet materials on it with the corresponding cutting machine, such that both perfect flatness and great flexibility and modularity for creation of different flat surface areas suitable for forming with said base are assured; and all this with a base formed by simple physical entities easily positioned and handled by a user, and perfectly applicable to the industrial sectors existing today.

### Background of the Invention

The use and application of bases for sheet material cutting machines are known; such that said bases must have a flatness geometric tolerance along the length and width of their entire surface with a very small value to thereby enable assuring the most precise possible cut.

In this sense, the use of bases as such is known, working as support surfaces, and in which the work surface suitable for cutting the different sheet materials with the corresponding cutting machine is positioned and retained by means of applying a vacuum. By way of example, for better understanding and in a non-limiting manner, said work surfaces which are positioned on the support surface formed by the sliding bases object of the patent, can be pieces of porous sheet materials, being able to be plastics such as PU, or textile materials, conveyor belts, brushes for cutting, etc. Current support surfaces have a series of drawbacks:
The extreme difficulty in achieving very precise flatness geometric tolerances is first pointed out because they tend to be bases which have large surface dimensions and are manufactured in different modules creating discontinuities between them, which manifest when cutting the sheet material. To achieve a good base finish and surface tolerance, the cost of the base is increased. Furthermore, the surfaces required for making cuts on sheet materials have significant dimensions. The structure necessary for fixing these modular bases is currently very expensive because it requires high precision and the machining process thereof is complex.

Finally, and as regards the method for cutting the sheet material, the work surface installed on the bases must be able to slide in some of the applications (depending on the sheet material to be cut), which is extremely difficult because said base only serves as a support and does not have the capacity to allow the work surface to move and slide thereon.

The development of a new base for sheet material cutting machines capable of solving the preceding problems is necessary, such that it allows easily adjusting the base for correct leveling, thereby assuring a high degree of flatness throughout the entire cutting surface of the sheet material, without this translating into a direct cost of the base. This leveling capacity in turn makes an expensive, high-precision structure unnecessary.

The U.S Patent US-6.189.876 B1 discloses a platform and a method for leveling the upper surface of a printed circuit board placed upon a work table. The platform comprises a substantially flat plate, the plate having a fastener for planerly securing the printed circuit board thereto, and at least one support having a length between a first end and a second end, the second end of the at least one support attached to the plate, and wherein the length of the at least one support is selected such that an angle between the plate and the work table compensates for any angular displacement of the printed circuit board relative to the plate.

### Description of the Invention

The invention is defined in the attached independent claim.

The present invention relates to a modular and adjustable sliding base for sheet material cutting machines, comprising an upper surface, which will be the support surface, and a lower surface, where said upper surface has a plurality of through holes for applying a vacuum to the upper surface, as is known in the current state of the art, the purpose of said holes being to create suction on the sheet material to be cut, preventing it from being driven by the corresponding cutting machine; and where the size of said holes is sufficient to allow the absorption of dust particles or the like, without causing obstruction thereof during operation, keeping the surface of the sliding base clean for the most part.

Additionally, the base object of the invention has a plurality of legs, where each leg in turn comprises: a through hole axially configured for housing a fixing element along the length of each leg; and an elastic element placed around the perimeter of some or all legs, allowing the height adjustment of each leg on a support surface as a result of modifying the thread depth of each fixing element with respect to the mechanical structure supporting these bases, the cutting surfaces, the sheet material to be cut as well as the guides and mechanical elements necessary for the correct operation of the different types of cutting heads.

These elements allow assuring a perfect flatness regardless of the support surface or mechanical structure to which it is coupled since, as can be seen, said legs have an associated fixing element which is housed in the through hole of each leg, where said fixing element is threaded onto the support surface in corresponding drilled holes, such that the base is fixed thereto in a simple and quick manner.

To assure height adjustment, the thread length of each fixing element with respect to the support surface is gradually modified, where the elastic elements assure that the base does not fall on the surface of the cutting machine due to the action of gravity since said elastic elements come into contact with the support surface before the legs do, the fixing elements therefore being the entities fixing and adjusting the height, and the elastic elements being the entities assuring the flatness position of the base object of the invention.

Therefore, when the surface of the cutting machine has irregularities, it is only necessary to act on the leg closest to said irregularities and modify the height until achieving the desired flatness.

It must be highlighted that if the surface of the cutting machine where the base object of the invention is installed is flat enough, then said base can be installed without fixing elements or elastic elements, since said base can be positioned with gravitational force alone, reducing the time for assembling it on the surface.

As a preferred embodiment, the option in which each fixing element housed in the through hole of each leg is a screw is highlighted, the head of which screw is embedded in the upper surface of the base, advantageously being able to be actuated from the upper part of said base. In a parallel manner, each elastic element is a coil spring coupled at one end to each leg and the other end overhangs until it comes into contact with the corresponding support surface.

In order to assure sliding of the work surface or any object to be moved on the sliding bases, the upper surface comprises, with respect to the base, a plurality of cavities configured for allowing the housing of rollers, respectively. The upper surface is therefore provided in a simple but effective manner with rollers on which the work surface or any object to be moved is supported, and where said rollers rotate freely, which assures sliding of the work surface or any object to be moved on said base.

Particularly and optionally, each cavity has a cylindrical perforation and two half bearings made in said base configured for allowing the support and free rotation of each roller with respect to each cavity. Therefore, the base already has, during forming, the cavities in which the rollers will be coupled since they will be supported in the corresponding half bearings, and they can be replaced or eliminated anytime the user wishes.

Optionally, each rotation axis of the cylindrical perforation of each cavity is inclined a specific angle with respect to the rotation axis of the cylindrical perforations of the contiguous cavities. Channels forcing the passage and sliding of the work surface with respect to the base are therefore created, seeking at all times the direction towards the inside of the base where the sheet material is to be cut, preventing the work surface from moving laterally, thereby achieving uniform linear movement, preventing folds or areas with different stresses.

The base can have a plurality of non-adjustable legs located in the inner area of the lower surface of the base itself and having the purpose of distributing the pressure to be exerted by the cutting machine when it acts on the sheet material and said base, although said pressure distribution is done fundamentally when neither the elastic elements nor the coupling elements are positioned on the rest of the adjustable legs.

Said non-adjustable legs can be converted into adjustable legs with the simple addition of flexible elements and fixing elements therein, in the event that the surface of the cutting machine is highly irregular.

Therefore, with the proposed invention an adjustable base is obtained for sheet material cutting machines capable of providing a perfectly flat surface for arranging the corresponding work surface thereon, and for subsequent cutting with the cutting machine, associated with the material arranged in the upper part of this sliding surface, arranged on the bases object of the application; assuring perfect flatness as well as great flexibility and modularity for creation, offering the possibility of creating cutting surfaces of different sizes; and all this with a base formed with simple elements, perfectly applicable to the cutting machinery existing today.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a first perspective view of the base for sheet material cutting machines object of the invention, with one of its legs having a fixing element in an exploded view.
Figure 2 shows a plan view of the base for sheet material cutting machines object of the invention, depicting the orientation of the cavities, and therefore of the sliding rollers of the work surface. It must be pointed out that the length and arrangement of said rollers, either perpendicular to the direction of sliding or with a slight angle with respect to this, are variable, this Figure 2 being illustrative but non-limiting.
Figure 3 shows an elevational view of the base for sheet material cutting machines object of the invention, depicting the greater length which the elastic elements and fixing elements have with respect to the legs, for subsequent screwing onto the support structure or surface.
Figure 4 shows another perspective view of an assembly of bases for sheet material cutting machines, coupled to one another and supported on the surface of the cutting machine, creating a cutting surface as large as required.
Figure 5 shows a perspective view of the roller to be coupled in the different cavities of the upper surface of the base for sheet material cutting machines object of the invention. These rollers can have a different length or diameter to optimize the sliding of each cutting surface.

### Preferred Embodiment of the Invention

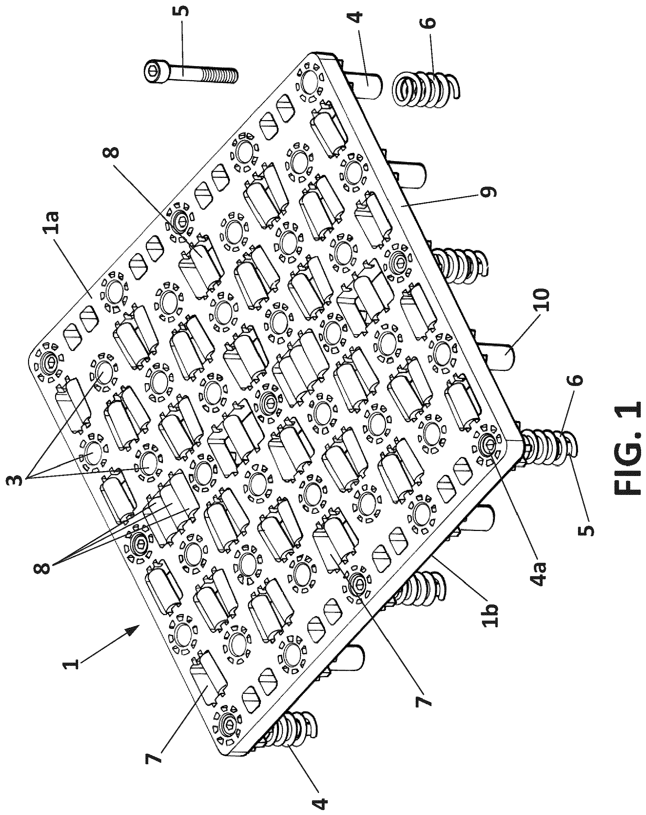

Figures 1 to 5 show how the base (1) for sheet material cutting machines comprises an upper surface (1a) and a lower surface (1b), where said upper surface (1a) has a plurality of through holes (3) configured for transmitting a negative pressure by means of vacuum to the upper surface (1a).

Furthermore, the base has a plurality of adjustable legs (4) comprising a through hole (4a) configured for housing an Allen screw (5) along the length of each leg (4), and a coil spring (6) coupled around the perimeter of each leg (4), allowing the height adjustment of each leg (4) on the surface (2) of a cutting machine by means of modifying the thread depth of each fixing element (5) with respect to said surface (2) of the cutting machine, and thereby perfectly leveling the upper surface (1a).

Therefore, the method for assembling said base (1) on the surface (2) of the cutting machine consists of:
a) placing the base (1) on the surface (2) of the cutting machine;
b) screwing the fixing elements (5) of each leg (4) into threaded holes existing for such purpose on the surface (2) of the cutting machine; and
c) leveling the upper surface (1a) of the base (1) by modifying the thread depth of the necessary fixing elements (5) until obtaining perfect leveling. This leveling is advantageously done from the upper surface.

Therefore, although the surface (2) of the cutting machine does not have a correct or minimum flatness for the correct cutting of the sheet material, only adjusting the screws (5) with respect to the surface (2) of the cutting machine allows successfully modifying the height of the different areas of the upper surfaces (1a) of the bases (1); and where the purpose of the coil spring (6) is to prevent the legs (4, 10) of the base (1) from being supported as a result of gravitational pull on the surface (2) of the cutting machine, and therefore without the possibility of being adjusted by the user.

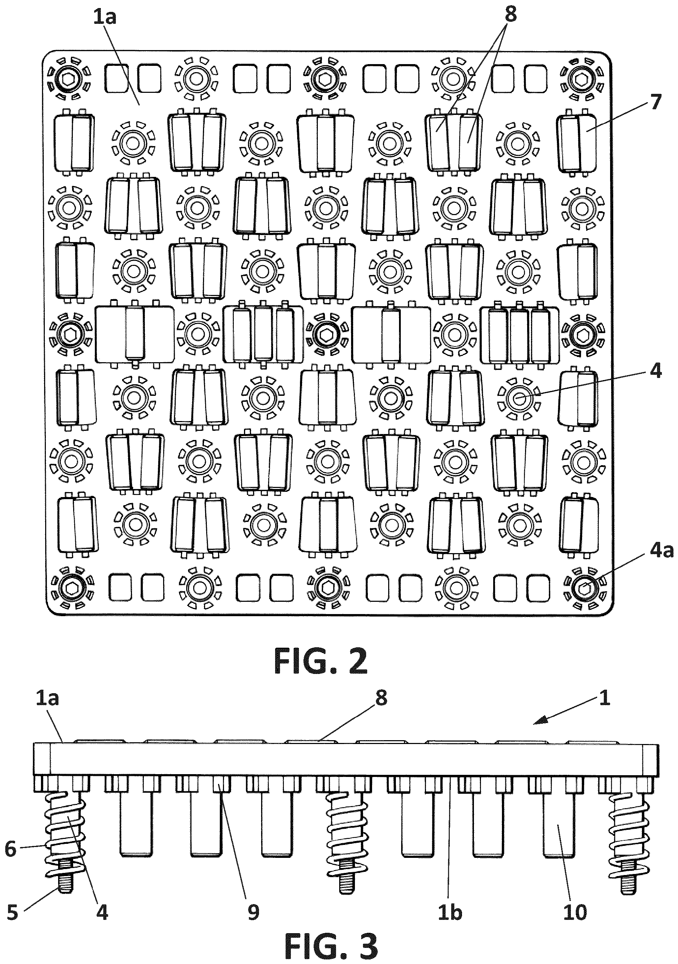

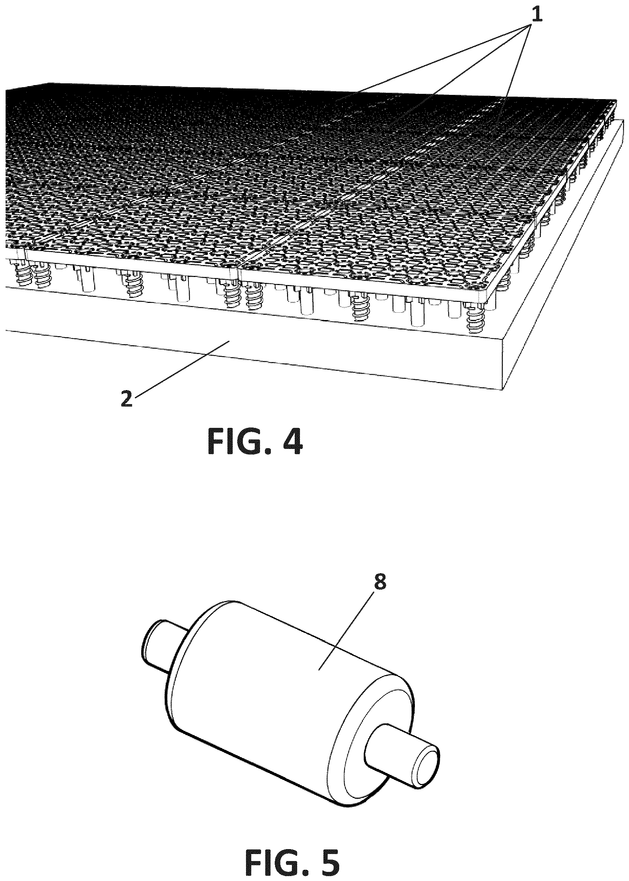

Likewise, Figures 1 and 2 show how the upper surface (1a) comprises a plurality of cavities (7) configured for allowing the housing of rollers (8), respectively, which can be seen in detail in Figure 5, where each cavity (7) has a cylindrical perforation and at least two half bearings made in said base (1) configured for allowing support by means of gravity and free rotation of each roller (8) with respect to each cavity (7).

Likewise, Figure 2 shows how the rotation axes of the cylindrical perforation of each cavity (7) are inclined at a specific angle with respect to the other axes for the purpose of achieving linear movement of the surface, preventing lateral movements. Therefore, as can be seen, the cylinders can be arranged perpendicular to the direction of movement of the surface or parallel. The base is formed such that the cavities allow housing one or more cylinders of different length and diameter, and these cavities in turn have half bearings which allow housing the cylinder or cylinders such that their rotation is perpendicular or with a slight angle with respect to the direction of sliding of the sliding surface acting as a support for the sheet material which will be cut.

Figures 1 and 3 show how the base (1) object of the invention has a plurality of non-adjustable legs (10) located in the inner area of the lower surface (1b) of the base (1) for assuring pressure distribution throughout the entire upper surface (1a) of the base (1). Said legs (10) can be converted into adjustable legs (4) with the simple addition of screws (5) and springs (6).

Figure 4 shows a plurality of bases (1) coupled to one another through respective coupling means (9) between the different bases (1) and located on the lower surface (1b) of said base (1). Said coupling means (9) can consist, for example, of a tongue and groove joint, simple butt joint, or using additional attachment parts.

In this sense, it is described that the base (1) is formed with a plastic material, which allows making a series of bases (1) with a single mold, reducing the cost of the process for forming said base (1), where furthermore, said plastic can give rise to an upper surface (1a) with different surface finish or sliding properties depending on each work surface to be installed on the bases.

Similarly, the rollers (8) are made of a plastic or metallic material, or even mixed rollers made of several materials are possible, depending on the sheet material and the application desired by the user, the latter being perfectly interchangeable with one another.

In view of this description and set of drawings, the person skilled in the art will understand that the embodiments of the invention which have been described can be combined in many ways within the object of the invention. The invention has been described according to several preferred embodiments thereof, but for the person skilled in the art it will be obvious that multiple variations can be introduced in said preferred embodiments without exceeding the object of the claimed invention.

## Claims

1. A modular and adjustable sliding base (1), comprising an upper surface (1a) and a lower surface (1b), where said upper surface (1a) has a plurality of through holes (3) communicating the upper and lower surfaces, and a plurality of legs (4) on the lower surface for supporting the base (1), the base (1) further comprising legs (4) having a through hole (4a) along the length of the leg and an elastic element (6) arranged around the perimeter of each leg (4) and having a threaded fixing element (5) that can be inserted in the through hole (4a) and emerging from the free end of the leg, for allowing height adjustment of each leg (4) on a support surface (2) as a result of modifying the thread depth of each fixing element (5) with respect to said support surface (2), wherein the upper surface (1a) comprises a plurality of cavities (7), and in that each cavity (7) has a perforation and several half bearings in said base (1) configured for allowing the support and free rotation of plastic, metal or mixed rollers (8), with respect to each cavity (7).

2. The modular and adjustable sliding base (1) according to claim 1, **characterized in that** each axis of the half bearings of each cavity (7) is inclined a specific angle with respect to the rest.

3. The modular and adjustable sliding base (1) according to claim 1, **characterized in that** said fixing elements (5) housed in the through hole (4a) of each leg (4) is a screw the head of which is embedded in the upper surface (1a) of the base (1).

4. The modular and adjustable sliding base (1) according to any of the preceding claims, **characterized in that** it has a plurality of non-adjustable legs (10) located in the inner area of the lower surface (1b) of the base (1).

5. The modular and adjustable sliding base (1) according to any of the preceding claims, **characterized in that** it is made of a plastic material.

6. The modular and adjustable sliding base (1) according to any of the preceding claims, **characterized in that** the elastic elements (6) are springs the length at rest of which is greater than the length of the legs (4) to which they are coupled.

## Patentansprüche

1. Modulare und einstellbare Gleitbasis (1), umfassend eine obere Fläche (1a) und eine untere Fläche (1b), wobei die obere Fläche (1a) eine Vielzahl von Durchgangsbohrungen (3) aufweist, die mit der oberen und unteren Fläche in Verbindung stehen, und eine Vielzahl von Füßen (4) an der unteren Fläche zur Halterung der Basis (1), wobei die Basis (1) des Weiteren Füße (4) mit einer Durchgangsbohrung (4a) in der Länge des Fußes und einem elastischen Element (6) umfasst, das um den Umfang jedes Fußes (4) herum angeordnet ist, und mit einem mit Gewinde versehenen Befestigungselement (5), das in die Durchgangsbohrung (4a) eingesetzt werden kann und von dem freien Ende des Fußes austritt, um eine Höheneinstellung jedes Fußes (4) auf einer Auflagefläche (2) als Folge einer Modifizierung der Gewindetiefe jedes Befestigungselements (5) bezüglich der Auflagefläche (2) zuzulassen, wobei die obere Fläche (1a) eine Vielzahl von Hohlräumen (7) enthält, und jeder Hohlraum (7) eine Durchbrechung und mehrere Lagerhalbschalen in der Basis (1) aufweist, die gestaltet sind, die Lagerung und freie Rotation von Walzen (8) aus Kunststoff, Metall oder gemischt bezüglich jedes Hohlraums (7) zu ermöglichen.

2. Modulare und einstellbare Gleitbasis (1) nach Anspruch 1, **dadurch gekennzeichnet, dass** jede Achse der Lagerhalbschalen jedes Hohlraums (7) in einem spezifischen Winkel bezüglich der Auflage geneigt ist.

3. Modulare und einstellbare Gleitbasis (1) nach Anspruch 1, **dadurch gekennzeichnet, dass** die in der Durchgangsbohrung (4a) jedes Fußes (4) aufgenommenen Befestigungselemente (5) eine Schraube ist, deren Kopf in der oberen Fläche (1a) der Basis (1) eingelassen ist.

4. Modulare und einstellbare Gleitbasis (1) nach einem der vorhergehenden Ansprüche, **dadurch gekennzeichnet, dass** sie eine Vielzahl von nicht einstellbaren Füßen (10) aufweist, die im inneren Bereich der unteren Fläche (1b) der Basis (1) angeordnet sind.

5. Modulare und einstellbare Gleitbasis (1) nach einem der vorhergehenden Ansprüche, **dadurch gekennzeichnet, dass** sie aus einem Kunststoff hergestellt ist.

6. Modulare und einstellbare Gleitbasis (1) nach einem der vorhergehenden Ansprüche, **dadurch gekennzeichnet, dass** die elastischen Elemente (6) Federn sind, deren Länge bei Auflage größer ist als die Länge der Füße (4), mit denen sie verbunden sind.

## Revendications

1. Une base coulissante modulaire et ajustable (1), comprenant une surface supérieure (1a) et une surface inférieure (1b), où ladite surface supérieure (1a) a une pluralité de trous débouchants (3) faisant communiquer les surfaces supérieure et inférieure, et une pluralité de pattes (4) sur la surface inférieure pour supporter la base (1), la base (1) comprenant en outre des pattes (4) ayant un trou débouchant (4a) sur la longueur de la patte et un élément élastique (6) agencé autour du périmètre de chaque patte (4) et ayant un élément de fixation fileté (5) qui peut être inséré dans le trou débouchant (4a) et émergeant de l'extrémité libre de la patte, pour permettre un ajustement en hauteur de chaque patte (4) sur une surface de support (2) en résultat d'une modification de la profondeur de filetage de chaque élément de fixation (5) par rapport à ladite surface de support (2), dans laquelle la surface supérieure (1a) comprend une pluralité de cavités (7), et en ce que chaque cavité (7) a une perforation et plusieurs demi-coussinets dans ladite base (1) configurés pour permettre le support et la rotation libre de rouleaux en plastique, en métal ou mixtes (8), par rapport à chaque cavité (7).

2. La base coulissante modulaire et ajustable (1) selon la revendication 1, **caractérisée en ce que** chaque axe des demi-coussinets de chaque cavité (7) est incliné à un angle spécifique par rapport au reste.

3. La base coulissante modulaire et ajustable (1) selon la revendication 1, **caractérisée en ce que** lesdits éléments de fixation (5) logés dans le trou débouchant (4a) de chaque patte (4) sont une vis dont la tête est insérée dans la surface supérieure (1a) de la base (1).

4. La base coulissante modulaire et ajustable (1) selon n'importe lesquelles des revendications précédentes, **caractérisée en ce qu'**elle a une pluralité de pattes non ajustables (10) situées dans la zone interne de la surface inférieure (1b) de la base (1).

5. La base coulissante modulaire et ajustable (1) selon n'importe lesquelles des revendications précédentes, **caractérisée en ce qu'**elle est faite en matière plastique.

6. La base coulissante modulaire et ajustable (1) selon n'importe lesquelles des revendications précédentes, **caractérisée en ce que** les éléments élastiques (6) sont des ressorts dont la longueur au repos est plus grande que la longueur des pattes (4) auxquelles ils sont couplés.
